Europäisches Patentamt

European Patent Office

Office européen des brevets

(19)

(11) Veröffentlichungsnummer: **0 260 386**
**A2**

(12) # EUROPÄISCHE PATENTANMELDUNG

(21) Anmeldenummer: 87108957.9

(22) Anmeldetag: 23.06.87

(51) Int. Cl.4: **C08F 210/02** , C08F 222/06 , C08F 2/08 , //(C08F210/02,222:06),(C08F22-2/06,210:02)

(30) Priorität: 20.08.86 DE 3628247

(43) Veröffentlichungstag der Anmeldung: 23.03.88 Patentblatt 88/12

(84) Benannte Vertragsstaaten: BE DE FR GB IT NL

(71) Anmelder: **HÜLS AKTIENGESELLSCHAFT Patentabteilung / PB 15 - Postfach 13 20 D-4370 Marl 1(DE)**

(72) Erfinder: **Scholz, Bernhard-Peter, Dr. Clemensstrasse 5 D-4353 Oer-Erkenschwick(DE)**

(54) Verfahren zur Herstellung von pulverförmigen Olefin-Maleinsäureanhydrid-Copolymeren.

(57) Beschrieben wird ein Verfahren, bei dem aus konzentrierten Lösungen von 1-Olefinen und Maleinsäureanhydrid in organischen Lösungsmitteln durch radikalische Polymerisation in Gegenwart von Dispersionsmitteln pulverförmige Olefin-Maleinsäureanhydrid-Copolymere hergestellt werden.

EP 0 260 386 A2

## Verfahren zur Herstellung von pulverförmigen Olefin-Maleinsäureanhydrid-Copolymeren

Beschrieben wird ein Verfahren, bei dem aus konzentrierten Lösungen von 1-Olefinen und Maleinsäureanhydrid (MSA) in organischen Lösungsmitteln durch radikalische Polymerisation pulverförmige Olefin-MSA-Copolymere hergestellt werden.

Olefine wie Ethylen, Propen, 1-Buten oder Isobuten können mit MSA copolymerisiert werden. Dabei entstehen Copolymere mit gleichen molaren Anteilen von Olefin und MSA.

Bei der Polymerisation in organischen Lösungsmitteln entstehen bei Temperaturen über 100 °C weiche, klebende Produkte, die dazu neigen, zusammenzuklumpen und sich an Rührer und Reaktorwänden festzusetzen. Hohe Temperaturen begünstigen aber die Bildung von Polymeren mit niedrigem Molekulargewicht, die beispielsweise als Dispergatoren verwendet werden.

Bei Temperaturen unter 100 °C können pulverförmige Olefin-MSA-Copolymere hergestellt werden. Nachteilig ist dabei, daß bei den niedrigen Temperaturen für einen MSA-Umsatz von über 90 % sehr hohe Reaktionszeiten benötigt werden.

Bei den bekannten Verfahren wird versucht, die Molekulargewichte durch Zusätze bei niedrigen Temperaturen zu senken. So werden nach GB-PS 851 237 Carbonsäuren, nach US-PS 2 857 365 Phosphite und nach US-PS 2 938 016 Aldehyde zugesetzt, wodurch Olefin-MSA-Copolymere mit niedrigem Molekulargewicht aus organischen Lösungen bei 40 bis 80 °C gefällt und abgetrennt werden können. Die Reaktionszeit liegt allgemein bei etwa 20 Stunden.

Bei allen Versuchen werden am Ende der Polymerisation Feststoffgehalte von nicht mehr als 20 % erreicht.

Nach der Japanischen Patentschrift 54-156 092 können Olefine mit vorzugsweise 4 bis 6 C-Atomen mit MSA copolymerisiert werden, wobei ein Zusatz von Ethylen-Vinylacetat-Copolymer ein Ankleben des gebildeten Polymers am Reaktionsgefäß verhindert. Die Polymerisation wird in aliphatischen Kohlenwasserstoffen bei 75 °C in 3 Stunden durchgeführt, wobei MSA-Umsätze von 70 bis 80 % und Feststoffgehalte von unter 20 % erreicht werden.

Technisch interessante MSA-Umsätze von über 90 % sowie Feststoffgehalte von über 20 % werden in dieser Patentschrift nicht beschrieben.

Aufgabe der vorliegenden Erfindung ist es, ein Verfahren bereitzustellen, durch das aus konzentrierten Lösungen von Olefinen und MSA bei verkürzten Reaktionszeiten unter hohen MSA-Umsätzen pulverförmige Olefin-MSA-Copolymere hergestellt werden können.

Die Aufgabe wird erfindungsgemäß dadurch gelöst, daß man eine radikalische Polymerisation von Olefinen mit MSA bei 80 bis 160 °C in aromatischen Lösungsmitteln in Gegenwart von Dispersionsmitteln durchführt, wobei man die Polymerisation bei einem MSA-Umsatz von über 90 % beendet und dann das Polymer als Pulver abtrennt.

Als Olefine kommen 1-Olefine wie Ethylen, Propen, 1-Buten oder Isobuten in Betracht. Bevorzugt wird Ethylen eingesetzt.

Geeignete aromatische Lösungsmittel sind Benzol, Xylol, Cumol, tert.-Butylbenzol und andere Alkylbenzole, wobei auch deren Mischungen verwendet werden können. Vorzugsweise wird Toluol verwendet.

Die Reaktionstemperatur liegt vorzugsweise im Bereich von 90 bis 150 °C.

Vorzugsweise wird die Polymerisation beendet, wenn ein MSA-Umsatz von über 95 % erreicht ist.

Obwohl die Polymerisation auch in verdünnten Lösungen durchgeführt werden kann, setzt man kleine Lösungsmittelmengen ein, um bei gegebener Reaktorgröße die Raum-Zeit-Ausbeute zu erhöhen. Im allgemeinen werden Olefine und MSA in solchen Konzentrationen eingesetzt, daß nach beendeter Polymerisation ein Feststoffgehalt von 20 bis 70 % erreicht wird. Vorzugsweise liegt der Feststoffgehalt bei 30 bis 60 %.

Geeignete Dispersionsmittel sind Polystyrol, Ethylen-Vinylacetat-Copolymere oder deren Mischungen. Diese Dispersionsmittel können ein Molekulargewicht von 5 000 bis 250 000 haben, wobei man Produkte mit Molekulargewichten von 100 000 bis 250 000 bevorzugt.

Bezogen auf die Monomerenmischung, werden 0,01 bis 5 Masse-% Dispersionsmittel eingesetzt. Vorzugsweise werden, bezogen auf die Monomerenmischung, 0,05 bis 3 Masse-% Polystyrol oder 0,03 bis 1 Masse-% Ethylen-Vinylacetat-Copolymer als Dispersionsmittel verwendet. Die Dispersionsmittel können zu Beginn der Polymerisation zugesetzt oder während der Polymerisation zudosiert werden.

Als Initiator für die Polymerisation sind übliche Peroxide wie Dibenzoylperoxid, Laurylperoxid und Cumolhydroperoxid und Azoverbindungen wie Azoisobutyronitril geeignet. Vorzugsweise wird Dibenzoylperoxid verwendet. Die Initiatormenge liegt bei 0,1 bis 5 Mol-%, bezogen auf eingesetztes MSA. Der Initiator kann vorgelegt oder vorzugsweise während der Polymerisation zudosiert werden.

Die nach dem vorliegenden Verfahren hergestellten Olefin-MSA-Copolymere fallen als Pulver an. Sie können aus dem Reaktionsgemisch durch Dekantieren, Zentrifugieren oder Filtrieren abgetrennt werden. Teilweise werden die Produkte im Lösungsmitel zunächst stabil dispergiert, wobei erst nach dem Abkühlen auf Raumtemperatur ein Pulver sedimentiert, das filtriert werden kann. Man kann auch sehr feinteilige Pulver erhalten, die in der Reaktionsmischung nach dem Abkühlen auf Raumtemperatur über mehrere Tage stabil dispergiert bleiben. Aus derartigen Suspensionen kann das Pulver durch Zentrifugieren oder nach Zugabe eines aliphatischen Kohlenwasserstoffs durch Filtration abgetrennt werden.

Die hier hergestellten Pulver sind kompakt und zeichnen sich durch eine hohe Schüttdichte aus. Diese Pulver sind besonders gut für polymeranaloge Reaktionen geeignet, da in Suspensionen trotz hoher Pulverkonzentration vergleichsweise niedrige Viskositäten auftreten. So sind 50 %ige Suspensionen in Toluol noch gut rührbar.

Bei polymeranalogen Reaktionen können die Anhydridgruppen im Olefin-MSA-Copolymer beispielsweise mit Alkali, Alkoholen oder Aminen zu teilweise oder vollständig verseiften, veresterten oder amidierten Produkten umgesetzt werden.

Nach dem vorliegenden Verfahren werden farblose, pulverförmige Olefin-MSA-Copolymere mit vorzugsweise niedrigem Molekulargewicht von 1 000 bis 30 000 hergestellt. Man kann aber auch trotz der hohen Reaktionstemperaturen höhere Molekulargewichte erreichen.

Bei Gesamtreaktionszeiten von nur etwa 10 Stunden (MSA-Umsatz über 90 %) und hochkonzentrierten Lösungen sind die Raum-Zeit-Ausbeuten sehr hoch.

Die Hilfsmittelkonzentrationen sind gering.

Im allgemeinen werden Olefin-MSA-Copolymere mit äquimolaren Anteilen von Olefin und MSA erhalten. Bei dem vorliegenden Verfahren kann man das Verhältnis von Olefin zu MSA auch variabel einstellen und Polymere mit nicht äquimolaren Anteilen von Olefin und MSA herstellen.

Die nach dem beschriebenen Verfahren hergestellten Olefin-MSA-Copolymere haben ein breites Anwendungsfeld. Copolymere mit niedrigem Molekulargewicht finden z. B. als Dispergatoren für Pigmente Verwendung. Produkte mit hohem Molekulargewicht werden z. B. als Verdicker eingesetzt. Die spezifischen Eigenschaften des Copolymers können dabei durch nachträgliche Umsetzung der Anhydridgruppe der jeweiligen Problemstellung leicht angepaßt werden.

Die folgenden Beispiele sollen die Erfindung erläutern.

Beispiele 1 bis 5, Vergleichsbeispiele A und B

In einem 12 l-V₄A-Reaktor mit Impellerrührer (250 Upm) und Sonde zur Messung des Ethylenverbrauchs werden Toluol bzw. Cumol, MSA und, mit Ausnahme von Beispiel 4, entwässertes Dibenzoylperoxid (BPO) vorgelegt. In Beispiel 4 wird BPO, in 1 000 ml Toluol gelöst, in 3 Stunden zudosiert. Bei den Beispielen 1 bis 5 enthält die vorgelegte Mischung zusätzlich ein Dispersionsmittel.

Die Mischungen werden auf 90 °C erwärmt, worauf unter Rühren 15 bar Ethylen aufgedrückt werden.

Einsatzmengen und analytische Daten gehen aus Tabelle 1 hervor.

3

Tabelle 1:

| Beispiel | 1 | A | 2 | 3 | 4 | B | 5 |
|---|---|---|---|---|---|---|---|
| Toluol, gesamt (ml) | 6 000 | 6 000 | 6 000 | 6 000 | 6 000 | 6 000 | 6 000 (Cumol) |
| MSA (g) | 1 000 | 1 000 | 1 000 | 2 000 | 2 000 | 2 000 | 1 000 |
| Dispersionsmittel (g) | 10 EVA[1] | 0 | 10 PS[2] | 20 PS | 20 EVA | 0 | 10 EVA |
| BPO (g) | 36.1 | 36.1 | 36.1 | 72.1 | 72.1 | 72.1 | 72.1 |
| Ausbeute (g) | 1 201 | 607 | 1 101 | 2 400 | 2 516 | 0 | 1 219 |
| Anbackungen (g) | 0 | 430 | 0 | 0 | 0 | 100 %[3]) | 0 |
| Eta red.[4] | 0.122 | 0.078 | 0.089 | 0.107 | 0.130 | - | 0.075 |
| RZ/Stunden[5] | 6 | 10 | 8 | 7 | 7 | - | 6 |
| monomeres MSA[6] | 0.9 % | 3.6 % | 2.5 % | 1.1 % | 1.4 % | - | 0.7 % |
| FG[7] | 20 | 20 | 20 | 33 | 33 | 33 | 20 |

1) Ethylen-Vinylacetat-Copolymer (LEVAPREN[R] 500 von Bayer AG, D-5090 Leverkusen)
2) Polystyrol mit $M_W$ = 150 000
3) nur Anbackungen und grobes kristallines Material, Versuch mußte abgebrochen werden
4) 1 %ige Lösung in DMF bei 25 °C
5) Reaktionszeit bis Ende Ethylenaufnahme
6) bestimmt über Polarographie
7) Feststoffgehalt bei Polymerisationsende

Tabelle 1 zeigt:

1) In den Beispielen 1 bis 5 ist die Ethylenaufnahme nach 6 bis 8 Stunden beendet. Das Produkt fällt als feines, farbloses Pulver an.

2) Ohne Dispersionsmittel liegt bei Feststoffgehalten von 20 % (Vergleichsbeispiel A) der Anteil der Anbackungen bei über 40 %. Die Reaktionszeit ist verlängert. Der Rest-MSA-Gehalt ist erhöht.

4

3) Ohne Dispersionsmittel und bei Feststoffgehalten von 33 % (Vergleichsbeispiel B) muß der Versuch vorzeitig abgebrochen werden, da das gesamte Polymer als angebackte Masse anfällt.

## Beispiele 6 bis 11

Es wird wie in Beispiel 1 verfahren. Man polymerisiert jedoch bei höheren Temperaturen. BPO wird immer dosiert.

Einsatzmengen und Versuchsergebnisse gehen aus Tabelle 2 hervor.

Tabelle 2:

| Beisp. | Temp. | Vorlage | | | Dosierung | | | DZ[1] | Maximale RG[2] | $M_n$[3] | $M_w$[3] | Monomeres MSA | FG[4] | % D[5] |
| | | Toluol (ml) | MSA (g) | PS (g) | BPO (g) | PS (g) | Toluol (ml) | (Stunden) | (Stunden) | | | (%) | (%) | |
| 6 | 120 | 3 500 | 3 000 | 10 | 107 | 10 | 1 500 | 6 | 3.0 | 2 900 | 7 600 | 1.5 | 48 | 0.45 |
| 7 | 120 | 3 500 | 3 000 | 20 | 107 | 0 | 1 500 | 6 | 1.5 | 3 100 | 9 000 | 0.9 | 48 | 0.45 |
| 8 | 120 | 3 500 | 3 000 | 0 | 107 | 20 | 1 500 | 6 | 3.0 | 2 600 | 6 900 | 6.0 | 48 | 0.45 |
| 9 | 130 | 3 500 | 3 000 | 6 | 107 | 6 | 1 500 | 4 | 1.5 | 2 600 | 7 500 | 2.0 | 48 | 0.27 |
| 10 | 140 | 3 500 | 3 000 | 10 | 107 | 10 | 1 500 | 4 | 1.5 | 2 300 | 5 600 | 1.2 | 48 | 0.45 |
| 11 | 120 | 3 500 | 3 000 | 10[6] | 107 | 10[6] | 1 500 | 4 | 2.0 | 2 200 | 8 800 | 1.0 | 48 | 0.45 |

1) Dosierzeit

2) Maximale Reaktionsgeschwindigkeit bestimmt aus Ethylenaufnahme und Delta T-Messung, Zeit nach Dosierstart

3) gelchromatographisch bestimmt

4) Feststoffgehalt bei Polymerisationsende

5) % Dispersionsmittel

6) EVA

0 260 386

Ergebnisse:

1) Die Reaktionszeit ( = Dosierzeit und 2 Stunden Nachrührzeit) beträgt 6 bis 8 Stunden.

2) Bei Vorlage der gesamten Dispersionsmittelmenge (Beispiel 7) sind Reaktionsgeschwindigkeit und Molekulargewicht am höchsten.

3) Bei den Beispielen 6 bis 10 werden stabile Dispersionen erhalten, die erst bei Raumtemperatur brechen.

Beispiel 11 liefert eine auch bei Raumtemperatur über mehrere Tage stabile Dispersion.

Beispiele 12 bis 15

Es wird wie in Beispiel 1 verfahren. Dabei wird jedoch der Druck des Ethylens variiert. Polymerisationstemperatur: 90 °C.

Einsatzmengen und Ergebnisse sind in Tabelle 3 zusammengefaßt.

Tabelle 3:

| Beisp. | Druck | Vorlage | | | Dosierung | | Polymer | | unumgesetztes MSA[3] |
| | | Toluol | MSA | EVA | BPO | Toluol | $Eta_{red}$[1] | Molverhältnis MSA : Ethylen[2] | |
| | (bar) | (ml) | (g) | (g) | (g) | (ml) | | | (%) |
|---|---|---|---|---|---|---|---|---|---|
| 12 | 15 | 4 000 | 2 000 | 20 | 72.1 | 1 000 | 0.130 | 1    : 1 | 1.4 |
| 13 | 8 | 4 000 | 2 000 | 20 | 96.1 | 2 000 | 0.081 | 1.11 : 1 | 2.8 |
| 14 | 5 | 4 000 | 2 000 | 20 | 96.1 | 2 000 | 0.067 | 1.17 : 1 | 3.5 |
| 15 | 3 | 4 000 | 2 000 | 20 | 96.1 | 2 000 | 0.050 | 1.26 : 1 | 3.6 |

1) 1 %ige Lösung in DMF bei 25 °C

2) berechnet aus der Elementaranalyse

3) polarographisch bestimmt

0 260 386

Aus Tabelle 3 ist zu entnehmen:

Mit fallendem Druck sinkt die Einbaurate des Ethylens. Gleichzeitig werden die Lösungsviskositäten der Ethylen-MSA-Copolymere und damit auch ihre Molekulargewichte verkleinert.

## Beispiel 16

1 000 g Ethylen-MSA-Copolymerpulver, hergestellt gemäß Beispiel 6, werden in 1 000 g Toluol aufgeschlämmt und auf 90 °C erwärmt. In 30 Minuten werden 2 560 g 25 %ige wäßrige Natronlauge zudosiert, worauf 30 Minuten bei 90 °C nachgerührt wird. Die Reaktionsmasse bleibt bis zuletzt gut rührbar.

Die Phasen werden getrennt. Die wäßrige Phase enthält das Natriumsalz des Ethylen-Maleinsäure-Copolymeren. Durch Ansäuern kann Ethylen-Maleinsäure-Copolymer gefällt werden.

## Vergleichsbeispiel C

Zu 1 000 g Pulver eines Ethylen-MSA-Copolymers mit $M_n$ = 3 000, das im Gegensatz zu dem Copolymer von Beispiel 16 ohne Dispersionsmittel und bei 75 °C polymerisiert worden war, werden 1 000 g Toluol gegeben. Das poröse Pulver saugt das Toluol völlig auf. Erst nach Zusatz von weiteren 1 000 g Toluol entsteht eine rührbare Suspension.

Während der Zugabe von 2 560 g 25 %iger wäßriger Natronlauge entsteht eine hochviskose, puddingartige Masse, die nicht mehr rührbar ist.

Nach dem Erkalten erfolgt Phasentrennung erst nach 16 Stunden. Die wäßrige Phase enthält das Natriumsalz des Ethylen-Maleinsäure-Copolymeren.

## Beispiel 17

200 g (1,58 Mol) Ethylen-MSA-Copolymer gemäß Beispiel 6 werden mit 121 g (1,05 Mol) 2-Ethylhexanol-(1) in 3 Stunden bei 170 °C umgesetzt. Dabei entsteht eine schwach gelbe, gut rührbare Flüssigkeit. Man kühlt auf 100 °C ab und gießt das Produkt, ein viskoses Öl, auf ein Blech aus.

Produkt: polymerer Teilester I mit 34 Mol-% Anhydridgruppen und 66 Mol-% Halbestergruppen

100 g polymerer Teilester I werden in 100 ml Aceton gelöst und dann in eine Mischung aus 450 ml Aceton, 200 ml Methanol und 30 g NaOH getropft. Der Niederschlag wird filtriert.

Als Produkt erhält man 105 g Natriumsalz des polymeren Teilesters II mit Carboxylgruppen, 2-Ethylhexylester-und Methylestergruppen. Das Produkt ist wasserlöslich.

## Vergleichsbeispiel D

Beispiel 17 wird wiederholt, wobei jedoch ein Ethylen-MSA-Copolymer gemäß Vergleichsbeispiel C eingesetzt wird. Da es nach Zugabe von 121 g 2-Ethylhexanol-(1) nicht gelingt, eine rührbare Reaktionsmasse herzustellen, wird der Versuch abgebrochen.

## Ansprüche

1. Verfahren zur Herstellung von pulverförmigen Olefin-Maleinsäureanhydrid-Copolymeren aus organischen Lösungen von Olefinen und Maleinsäureanhydrid durch radikalische Polymerisation in Gegenwart von Hilfsmitteln,

dadurch gekennzeichnet,

daß man die Polymerisation bei 80 bis 160 °C in aromatischen Lösungsmitteln in Gegenwart von Dispersionsmitteln durchführt, die Polymerisation bei einem Maleinsäureanhydridumsatz von über 90 % beendet und dann das Polymer als Pulver abtrennt.

2. Verfahren nach Anspruch 1,

dadurch gekennzeichnet,

daß man die Polymerisation bei 90 bis 150 °C durchführt und sie bei einem Maleinsäureanhydridumsatz von über 95 % beendet.

3. Verfahren nach den Ansprüchen 1 und 2,

dadurch gekennzeichnet,

daß die Reaktionsmischung am Ende der Polymerisation einen Feststoffgehalt von 20 bis 70 % aufweist.

4. Verfahren nach den Ansprüchen 1 bis 3,

dadurch gekennzeichnet,

daß der Feststoffgehalt 30 bis 60 % beträgt.

5. Verfahren nach den Ansprüchen 1 bis 4,

dadurch gekennzeichnet,

daß die Reaktion in Toluol, Xylol, Cumol oder tert.-Butylbenzol durchgeführt wird.

6. Verfahren nach Anspruch 5,

dadurch gekennzeichnet,

daß man die Reaktion in Toluol durchführt.

7. Verfahren nach den Ansprüchen 1 bis 6,

dadurch gekennzeichnet,

daß man 1-Olefine mit 2 bis 4 C-Atomen mit Maleinsäureanhydrid umsetzt.

8. Verfahren nach Anspruch 7,

dadurch gekennzeichnet,

daß man Ethylen einsetzt.

9. Verfahren nach den Ansprüchen 1 bis 8,

dadurch gekennzeichnet,

daß man 0.01 bis 5 Masse-% Dispersionsmittel, bezogen auf die Monomerenmischung, verwendet.

10. Verfahren nach Anspruch 9,

dadurch gekennzeichnet,

daß man Polystyrol verwendet.

11. Verfahren nach Anspruch 10,

dadurch gekennzeichnet,

daß man 0,05 bis 3 Masse-% Polystyrol, bezogen auf die Monomerenmischung, verwendet.

12. Verfahren nach Anspruch 9,

dadurch gekennzeichnet,

daß man Ethylen-Vinylacetat-Copolymere verwendet.

13. Verfahren nach Anspruch 12,

dadurch gekennzeichnet,

daß man in Gegenwart von 0,03 bis 1 Masse-% Ethylen-Vinylacetat-Copolymeren polymerisiert.

14. Olefin-Maleinsäureanhydrid-Copolymere, hergestellt nach einem Verfahren gemäß den Ansprüchen 1 bis 13.

15. Verfahren zur Herstellung von vollständig oder teilweise verseiften, veresterten oder amidierten Olefin-Maleinsäureanhydrid-Copolymeren,

dadurch gekennzeichnet,

daß man von Copolymeren gemäß Anspruch 14 ausgeht.